# EUROPEAN PATENT SPECIFICATION

(11) **EP 2 049 205 B1**
(45) Date of publication and mention of the grant of the patent: **22.12.2010**
(21) Application number: 06821027.7
(22) Date of filing: 10.08.2006
(51) Int. Cl.: A62B 25/00, B64D 11/00

(54) **AN ASSEMBLY COMPRISING A STORAGE BOX FOR A RESPIRATORY MASK TO BE WORN BY CREWMEMBERS OF AN AIRCRAFT**
ANORDNUNG MIT EINEM AUFBEWAHRUNGSBEHÄLTER FÜR EINE VON FLUGZEUGBESATZUNGSMITGLIEDERN ZU TRAGENDE ATEMMASKE
ARRANGEMENT COMPORTANT UNE BOÎTE DE STOCKAGE POUR MASQUE RESPIRATOIRE DEVANT ÊTRE PORTÉ PAR LES MEMBRES D'ÉQUIPAGE D'UN AÉRONEF

(43) Date of publication of application: 22.04.2009
(73) Proprietor: INTERTECHNIQUE, 78373 Plaisir Cedex (FR)
(72) Inventor: BLOCH, Nicolas, F-92260 Fontenay aux Roses (FR); MAROTTE, Henri, F-91760 Itteville (FR)
(74) Representative: Cabinet Plasseraud
(86) International application number: PCT/IB2006/003481
(87) International publication number: WO 2008/017901

(56) References cited:
- WO-A-02/054035
- FR-A1- 2 853 623

## Description

The present invention relates to equipment in particular for the flight crew in an aircraft, equipment such as a protective or respiratory mask, and a storage box for such a mask.

To ensure the safety of the passengers and crewmembers in case of a depressurization accident or the occurrence of smoke in the aircraft, aviation regulations require on board all airliners a safety oxygen supply circuit able to supply each passenger and crewmember with an oxygen flow rate function of the cabin altitude. Such oxygen is delivered to the crewmember or passenger, also known as end user, through a respiratory or protective mask.

After a depressurization accident or upon the occurrence of smoke in the aircraft, the crewmembers must don their protective mask upon their face as quickly as possible. Indeed, the lack of oxygen at high altitude (hypoxia) or the toxic fumes can alter the crewmembers' abilities to proceed with any emergency measures that will ensure the safety of the passengers and the aircraft.

A protective mask is generally stored in a box called a storage box located next to the crewmember's position. As Aviation Regulations (FAR) require that the mask may be put into place and supply oxygen to its wearer in less than 5 seconds, it is of the utmost importance that a crewmember rapidly reacts to grab the protective mask out of its storage box, and safely proceeds with any emergency measures.

Flight simulations as well as actual accidents have shown that a crewmember may not think of donning his/her protective mask right after detection of the accident.

Furthermore, during cruising at night, the lights in the cockpit are generally turned off so that some crewmembers may rest while at least one other flies the aircraft. Upon occurrence of an emergency situation or if for some other reasons a donning of the protective mask is required, the awake crewmembers may find it difficult to locate rapidly the storage box as it cannot be easily distinguished in the darkness of the cockpit.

Patent FR 2 853 623 discloses a storage box for receiving a protective mask adapted to be applied on the face of an aircraft crewmember. The storage box is installed in the cockpit of the aircraft near the crewmember. The storage box comprises a display on its cover to transmit information from the protective mask.

Today, there is a need for a storage box in which is received a protective mask that can be easily seen and isolated by a crewmember among the different equipments in the cockpit. There is also a need for a storage box that can catch the crewmember's attention in case of emergency situation.

Thus, it is desirable to develop such a storage box that can be easily seen and/or located. It is further desirable to develop a storage box that can be immediately located by a crewmember in emergency situations.

To this end, there is provided an assembly comprising a storage box as claimed in claim 1.

With the signaling means activable upon occurrence in the aircraft of a triggering event, the storage box can be easily detected in the environment surrounding the crewmember and the storage box itself. Furthermore, a triggering event is required to activate the signaling means, so that during normal cruising, the crewmember does not get distracted by the signaling means.

The above features, and others, will be better understood on reading the following description of particular embodiments, given as non-limiting examples. The description refers to the accompanying drawings:
FIG. 1 is a schematic of a storage box for a respiratory mask according to a first implementation of the invention; and,
FIG. 2 is a schematic of a storage box with a respiratory mask stored inside and its signaling means outside the box.

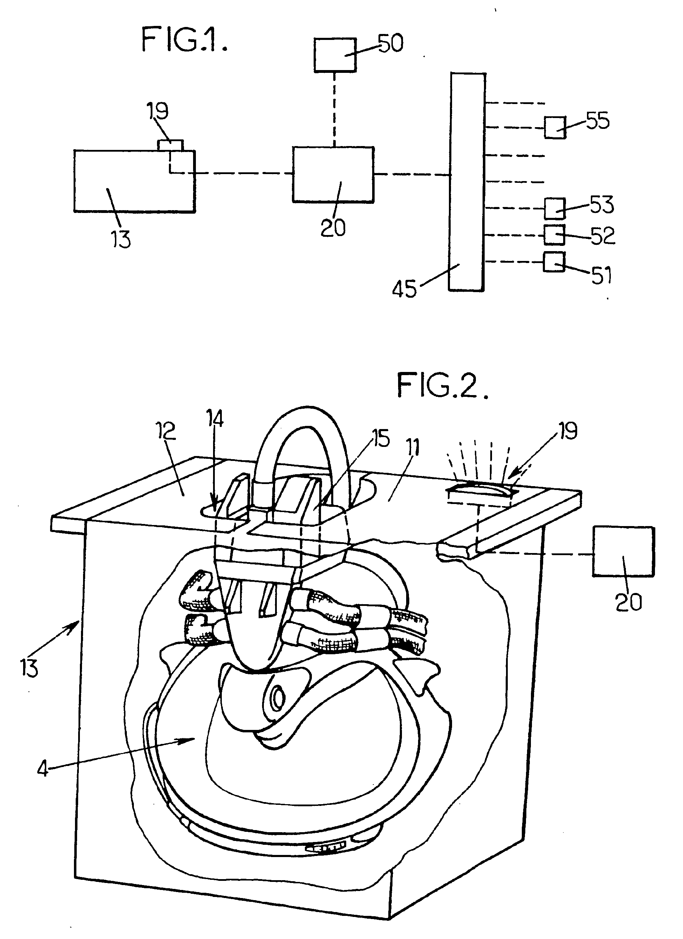

A first implementation of the storage box according to the invention is shown in FIG.1. Storage box 13, in which is stored a respiratory mask (not shown) is equipped with signaling means 19 adapted to distinguish said storage box 13 from its environment. As mentioned before, it is essential for a crewmember to rapidly identify the storage box from the different equipments surrounding him/her. It is also important to remind the crewmember that donning of the mask is essential, as due to the emergency situation, the crewmember may proceed with the set of emergency measures without thinking of donning the respiratory device. The lack of oxygen at high altitude (in case of a cabin loss of pressure) or the presence of smoke may rapidly alter the capacities of a crewmember without mask.

To locate the storage box 13 or draw the crewmember attention to it, the signaling means may be a light, an alarm sound produced by a sound warning device, a vibrating device, or any suitable device that will allow the crewmember to think of removing the respiratory mask from the box and put it on.

Such signaling means do not necessarily need to be activated all the time, as this would distract the crewmember from his/her chores. In the storage box according to the invention, the signaling means 19 are activated upon occurrence of a triggering event in the aircraft. The triggering event may be a sudden drop of the cabin pressure, the presence of smoke in the cabin and/or cockpit or simply turning off the lights in the cockpit when flying by night, as mentioned earlier.

For the triggering event detection, sensors may be provided to measure the different parameters that can characterize an emergency situation or a situation wherein it is important to have a rapid access to the protective mask (night flights for example). Sensors may be either provided within or close to the storage box or available elsewhere in the aircraft, their signals being available on the aircraft bus system.

To activate the signaling means, an electronic circuit 20 or CPU is provided either in the storage box ,or elsewhere in the aircraft to read the information related to the triggering event and activate said signaling means when appropriate. To that effect, electronic unit 20 is adapted to read the signals coming from the different sensors and detect any evolution of these signals that may correspond to a triggerring event.

Examples of sensors 50 as shown in FIG. 1 located close or within the storage box 13 are (but not limited to):
- a pressure sensor to detect any sudden pressure drop in the cabin pressure,
- a smoke detector to detect any occurrence of smoke or fumes in the cockpit, or,
- a light sensor to detect any significant variation of the light in the cockpit, like when the lights are turned off by a crewmember for night flights or when no cockpit lights are on, when night falls.

Other similar sensors (51 to 53 on FIG. 1) are generally provided within the aircraft and their signals are available from the aircraft bus. Additional devices may be available in the aircraft to detect any event linked to an emergency situation. Such devices (55 on FIG.1) are connected to the aircraft bus system and send a triggering signal representative of the event. Electronic circuit 20 is also adapted to active the signaling means 19 upon reading of such triggering signals available from the aircraft bus system.

Regarding night flight situation, a light sensor similar to the here above light sensor may also be provided within the cockpit. Turning off the lights in the cockpit may also be the triggering event, and a signal that the cockpit lights are turned off is made available through e.g. the bus system to the electronic circuit 20 to activate the signaling means. A light as a signaling device may be more suitable in this instance. But an alarm sound and/or vibrations may also be used to draw the crew member's attention.

FIG.2 is an exemplary illustration of the first implementation of the storage box according to the invention. The protective equipment 4 is stored in storage box 13. This box is provided with two doors 11 and 12 respectively. Each door includes a notch 14 coinciding with the notch of the other door. These notches allow grip surfaces 15 of the protective equipment to project outside storage box 13. Doors 11 and 12 form the access face of the storage box 13. Other access faces are also known for storage boxes, with two or more doors, with or without notches. The signaling means 19 are provided on one of the doors, here door 11 of the access face, but may be provided elsewhere on the storage box provided the crewmember's attention can be drawn to it.

Signaling means 19 is connected to electronic circuit 20 provided in the illustration of FIG. 2 next to the storage box 13.

## Claims

1. Assembly comprising a storage box (13) for receiving a protective mask (4) adapted to be applied on the face of an aircraft crewmember, said storage box being adapted to be installed in the cockpit of the aircraft, said storage box further comprising signaling means (19) adapted to help said aircraft crewmember distinguish said storage box from its environment when activated **characterized in that** said assembly further comprises an electronic unit (20) locatable in the aircraft to detect a triggering event and/or receive a signal corresponding to a triggering event and activate the signaling means upon occurrence of said triggering event.

2. Assembly according to the previous claim 1, wherein said triggering event is an accident in the aircraft.

3. Assembly according to the previous claim 1, wherein said triggering event is a significant decrease of the cockpit light.

4. Assembly according to any one of the previous claims, wherein the signaling means is a light.

5. Assembly according to any one of the claims 1 to 3, wherein the signaling means is a sound warning device that produces an alarm sound.

6. Assembly according to any one of the claims 1 to 3, wherein the signaling means is a vibrating device.

7. Aircraft comprising an assembly according to any one of the previous claims.

8. Aircraft according to claim 7 wherein a pressure sensor is provided in the cabin of the aircraft to measure any sudden drop in the cabin pressure, said sudden drop in the cabin pressure constituting a triggering event.

9. Aircraft according to any one of claims 7 and 8, wherein a light sensor is provided in the cockpit of the aircraft to measure any significant variation in the cockpit light, said significant variation in the cockpit light constituting a triggering event.

10. Aircraft according to any one of claims 7 to 9, wherein lights are provided in the cockpit of the aircraft to light up said cockpit, turning off said lights in the cockpit of the aircraft constituting a triggering event.

11. Aircraft according to any one of the claims 7 to 10, wherein a smoke detector is provided in the cabin or cockpit of the aircraft to detect any occurrence of smoke in said aircraft, the detection of smoke constituting a triggering event.

## Patentansprüche

1. Anordnung, umfassend einen Aufbewahrungsbehälter (13) zum Aufnehmen einer Schutzmaske (4), die angepasst ist, um auf das Gesicht eines Flugzeugbesatzungsmitglieds angewendet zu werden, wobei der Aufbewahrungsbehälter angepasst ist, um in dem Cockpit eines Flugzeugs installiert zu werden, wobei der Aufbewahrungsbehälter ferner Signalmittel (19) umfasst, die angepasst sind, um dem Flugzeugbesatzungsmitglied zu helfen, den Aufbewahrungsbehälter von seiner Umgebung zu unterscheiden, wenn sie aktiviert sind,
**dadurch gekennzeichnet, dass** die Anordnung ferner eine elektronische Einheit (20) umfasst, die in dem Flugzeug platzierbar ist, um ein Auslöseereignis zu detektieren oder/und ein Signal zu empfangen, welches einem Auslöseereignis entspricht, und die Signalmittel zu aktivieren, wenn das Auslöseereignis auftritt.

2. Anordnung nach Anspruch 1, wobei das Auslöseereignis ein Unfall in dem Flugzeug ist.

3. Anordnung nach Anspruch 1, wobei das Auslöseereignis eine signifikante Verminderung des Cockpit-Lichts ist.

4. Anordnung nach einem der vorhergehenden Ansprüche, wobei die Signalmittel ein Licht sind.

5. Anordnung nach einem der Ansprüche 1 bis 3, wobei die Signalmittel eine Klangwarnvorrichtung sind, welche einen Alarmklang erzeugt.

6. Anordnung nach einem der Ansprüche 1 bis 3, wobei die Signalmittel eine Vibrationsvorrichtung sind.

7. Flugzeug, umfassend eine Anordnung nach einem der vorhergehenden Ansprüche.

8. Flugzeug nach Anspruch 7, wobei in der Flugzeugkabine ein Drucksensor vorgesehen ist, um jeden plötzlichen Kabinendruckabfall zu messen, wobei der plötzliche Kabinendruckabfall ein Auslöseereignis darstellt.

9. Flugzeug nach Anspruch 7 oder 8, wobei in dem Cockpit des Flugzeugs ein Lichtsensor vorgesehen ist, um jede signifikante Variation im Cockpit-Licht zu messen, wobei die signifikante Variation im Cockpit-Licht ein Auslöseereignis darstellt.

10. Flugzeug nach einem der Ansprüche 7 bis 9, wobei in dem Cockpit des Flugzeugs Lichter vorgesehen sind, um das Cockpit zu erhellen, wobei ein Ausschalten der Lichter in dem Cockpit des Flugzeugs ein Auslöseereignis darstellt.

11. Flugzeug nach einem der Ansprüche 7 bis 10, wobei in der Kabine oder in dem Cockpit des Flugzeugs ein Rauchdetektor vorgesehen ist, um jedes Auftreten von Rauch in dem Flugzeug zu detektieren, wobei die Detektion von Rauch ein Auslöseereignis darstellt.

## Revendications

1. Ensemble comprenant une boîte de stockage (13) pour recevoir un masque protecteur (4) adapté pour être appliqué sur le visage d'un membre d'équipage d'un avion, ladite boîte de stockage étant adaptée pour être installée dans le poste de pilotage de l'avion, ladite boîte de stockage comprenant en outre un moyen de signalisation (19) adapté pour aider ledit membre d'équipage de l'avion à distinguer ladite boîte de stockage de son environnement en cas d'activation, **caractérisé en ce que** ledit ensemble comprend en outre une unité électronique (20) pouvant être placée dans l'avion pour détecter un événement déclenchant et/ou recevoir un signal correspondant à un événement déclenchant et activer le moyen de signalisation lorsque ledit événement déclenchant se produit.

2. Ensemble selon la revendication 1 précédente, dans lequel ledit événement déclenchant est un accident se produisant dans l'avion.

3. Ensemble selon la revendication 1 précédente, dans lequel ledit événement déclenchant est une diminution notable de la lumière dans le poste de pilotage.

4. Ensemble selon l'une quelconque des revendications précédentes, dans lequel le moyen de signalisation est une lampe.

5. Ensemble selon l'une quelconque des revendications 1 à 3, dans lequel le moyen de signalisation est un avertisseur sonore qui produit une alarme sonore.

6. Ensemble selon l'une quelconque des revendications 1 à 3, dans lequel le moyen de signalisation est un vibreur.

7. Avion comprenant un ensemble selon l'une quelconque des revendications précédentes.

8. Avion selon la revendication 7, dans lequel un capteur de pression est prévu dans la cabine de l'avion pour mesurer une brusque chute de la pression dans la cabine, ladite brusque chute de pression dans la cabine constituant un événement déclenchant.

9. Avion selon l'une quelconque des revendications 7 et 8, dans lequel un capteur de lumière est prévu dans le poste de pilotage de l'avion pour mesurer une variation sensible de la lumière dans le poste de pilotage, ladite variation sensible de la lumière dans le poste de pilotage constituant un événement déclenchant.

10. Avion selon l'une quelconque des revendications 7 à 9, dans lequel des lampes sont prévues dans le poste de pilotage de l'avion pour éclairer ledit poste de pilotage, l'extinction desdites lampes dans le poste de pilotage de l'avion constituant un événement déclenchant.

11. Avion selon l'une quelconque des revendications 7 à 10, dans lequel un détecteur de fumée est prévu dans la cabine ou dans le poste de pilotage de l'avion pour détecter une présence de fumée dans ledit avion, la détection de fumée constituant un événement déclenchant.
